# EUROPEAN PATENT SPECIFICATION

(11) **EP 2 391 682 B1**
(45) Date of publication and mention of the grant of the patent: **03.10.2012**
(21) Application number: 10700867.4
(22) Date of filing: 18.01.2010
(51) Int. Cl.: C09B 62/44, C09D 11/00, D06P 1/38, D06P 3/66

(54) **FIBER-REACTIVE AZO DYES, PREPARATION THEREOF AND USE THEREOF**
FASERREAKTIVE AZO-FARBSTOFFE, IHRE HERSTELLUNG UND VERWENDUNG
COLORANTS AZOÏQUES RÉACTIFS AUX FIBRES, PRÉPARATION CORRESPONDANTE ET UTILISATION CORRESPONDANTE

(30) Priority: 27.01.2009 DE 102009000417
(43) Date of publication of application: 07.12.2011
(73) Proprietor: DyStar Colours Deutschland GmbH, 65926 Frankfurt am Main (DE)
(72) Inventor: EHRENBERG, Stefan, 65795 Hattersheim (DE)
(86) International application number: PCT/EP2010/050494
(87) International publication number: WO 2010/086242

(56) References cited:
- EP-A1- 0 357 915
- EP-A1- 0 568 876
- EP-A2- 0 568 874
- WO-A1-2008/055805
- WO-A2-2007/006653

## Description

The invention relates to the technical field of fiber-reactive azo dyes.

The textile industry has a need for bright yellowish-red to red reactive dyes having good buildup and good fastnesses, as required, for example, for dyeing in the hues known as "Marlboro red" or else "Coca-Cola red".

Known dyes, including those described in DE 4214945 A1 and WO 2007/006653 A2, do not fully meet this demand. Also the Cu-based compounds described in WO 2008/055805 A1 and in EP 0 568 876 A1 do not meet the demand.

The present inventors, then, have found dyes that very substantially meet the requirements of buildup, brightness, washoff ability and fastness. Even the staining of adjacent fabric in a wet-contact fastness test proves to be surprisingly minimal.

The present invention accordingly provides azo dyes of formula (1) 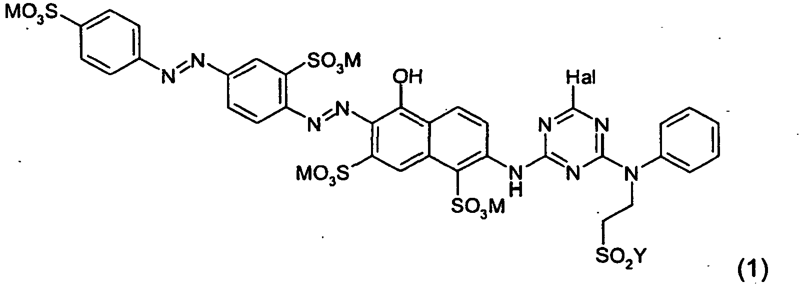 where
Y represents -CH=CH₂ or -CH₂CH₂Z, where Z is an alkali-detachable group;
M represents hydrogen, ammonium, an alkali metal or the equivalent of an alkaline earth metal;
and Hal represents Cl or F.

Alkali-detachable groups Z are for example halogen, such as chlorine and bromine; ester groups of organic carboxylic and sulfonic acids, such as alkylcarboxylic acids, optionally substituted benzenecarboxylic acids and optionally substituted benzenesulfonic acids, such as the groups (C₂-C₅)-alkanoyloxy including, in particular, acetyloxy, benzoyloxy, sulfobenzoyloxy, phenylsulfonyloxy and tolylsulfonyloxy; acidic ester groups of inorganic acids, as of phosphoric acid, sulfuric acid and thiosulfuric acid (phosphato, sulfato and thiosulfato groups) or di-(C₁-C₄)-alkylamino groups, such as dimethylamino and diethylamino.

Z is preferably vinyl, β-chlorethyl and more preferably β-sulfatoethyl.

The -SO₂Y group can be partly present as vinylsulfonyl and partly as -SO₂CH₂CH₂Z, preferably as β-sulfatoethylsulfonyl. The proportion of the respective dye having the vinylsulfonyl group is in particular up to about 30 mol%, based on the respective total amount of dye.

Alkali M is in particular lithium, sodium and potassium; an alkaline earth metal equivalent M is in particular the equivalent of calcium. M is preferably hydrogen or sodium.

The dyes of formula (1) according to the present invention can be present as a preparation in solid or liquid (dissolved) form. In solid form, they contain, in general, the electrolyte salts customary in the case of water-soluble and, in particular, fiber-reactive dyes, such as sodium chloride, potassium chloride and sodium sulfate, and may further contain the auxiliaries customary in commercial dyes, such as buffer substances capable of setting a pH in aqueous solution between 3 and 7, such as sodium acetate, sodium borate, sodium bicarbonate, sodium dihydrogenphosphate, sodium tricitrate and disodium hydrogenphosphate, small amounts of siccatives or, if present in liquid, aqueous solution (including a content of thickeners of the type customary in print pastes), they may also contain substances which ensure a long life for these preparations, for example mold preventatives.

In general, the dyes of formula (1) according to the present invention are present as a dye powder containing 20% to 85% by weight, based on the dye powder/preparation, of an electrolyte salt that is also known as a standardizer. These dye powders may further contain the aforementioned buffer substances in a total amount of up to 10% by weight, based on the dye powder. When the dyes of formula (1) according to the present invention are present in aqueous solution, the total dye content in these aqueous solutions will be up to about 50% by weight, as for example between 5% and 50% by weight, and the electrolyte salt content in these aqueous solutions is preferably below 10% by weight, based on the aqueous solution; the aqueous solutions (liquid preparations) can contain the aforementioned buffer substances in an amount which is generally up to 10% by weight and preferably up to 2% by weight.

The dyes of formula (1) according to the present invention are obtainable in a conventional manner, for instance through synthesis by means of customary diazotization and coupling reactions and conversion reactions with the halotriazine component using appropriate components in a manner familiar to one skilled in the art and using the requisite proportions.

Thus, the dyes of formula (1) according to the present invention are obtainable by reaction of the compounds of formulae (2), (3), (4) and (5) 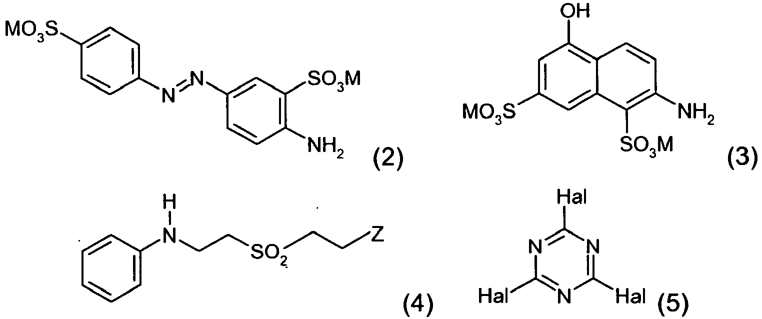 where Z and M are each as defined above, in a suitable sequence of diazotization, acylation and coupling reactions.

In one embodiment,
a) the compound of formula (3) is reacted with the compound of formula (5) to form the compound of formula (6) 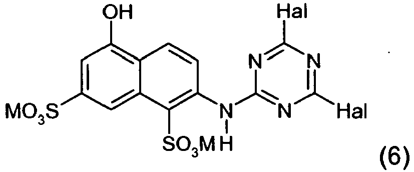
b) the compound of formula (2) is diazotized and coupled onto the compound of formula (6) to form the compound of formula (7) 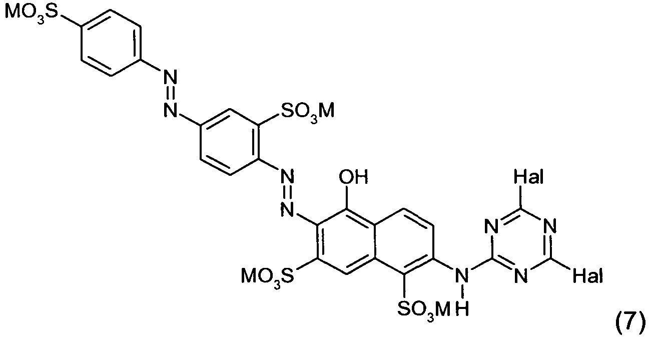 and finally
c) the compound of formula (7) is reacted with the compound of formula (4) to form the compound of formula (1) of the invention.

Alternatively, the compound of formula (6) can be reacted with the compound of formula (4) and subsequently coupled with the diazonium salt obtained by diazotization of the compound of formula (2).

In a further embodiment, the dyes of formula (1) according to the present invention are obtainable by
a) diazotizing the compound of formula (2) and coupling onto the compound of formula (3) to form a compound of formula (8) 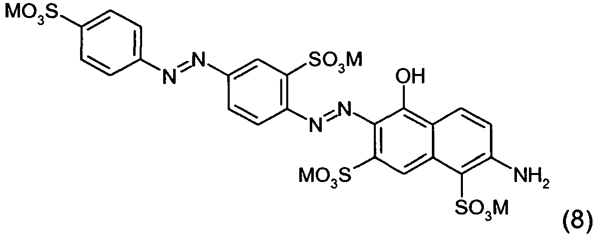
b) then reacting the compound of formula (8) with the compound of formula (5) to form the compound of formula (7) 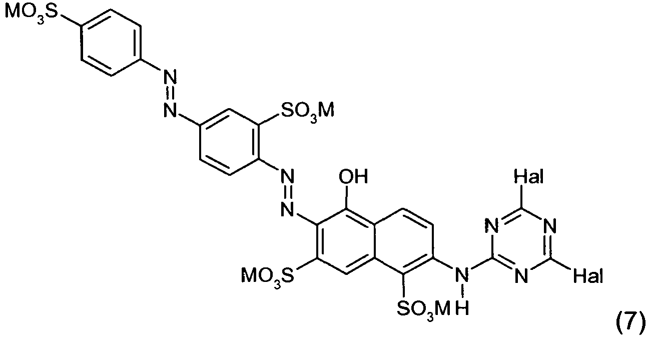 and
c) reacting the compound (7) with the compound of formula (4) to form the compound of formula (1).

Another possibility is to react the compound of formula (8) with a compound of formula (9).

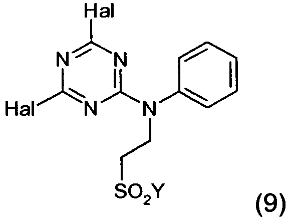

Separation of the chemically produced dyes of formula (1) according to the present invention, from their as-synthesized solution, can be effected by following generally known methods, for example either by precipitation from the reaction medium by means of electrolytes, such as sodium chloride or potassium chloride for example, or by evaporating or spray-drying the reaction solution, in which case a buffer substance can be added to this reaction solution.

The dyes of formula (1) according to the present invention have useful application properties and can be used for dyeing and printing materials comprising carboxamide and/or hydroxyl groups.

The materials mentioned can be for example in the form of sheetlike structures such as paper and leather, in the form of films, such as polyamide films for example, or in the form of a bulk composition, as of polyamide or polyurethane for example. Particularly, however, they are present in the form of fibers of the materials mentioned.

The dyes of formula (1) according to the present invention are used for dyeing and printing cellulosic fiber materials of any kind. They are preferably also useful for dyeing or printing polyamide fibers or blend fabrics composed of polyamide with cotton or with polyester fibers.

It is also possible to use the dyes of formula (1) according to the present invention to print textiles, paper or other materials by the inkjet process.

The present invention accordingly also provides for the use of the dyes of formula (1) according to the present invention for dyeing or printing materials comprising carboxamide and/or hydroxyl groups, or rather processes for dyeing or printing such materials in a conventional manner, by using one or more dyes of formula (1) according to the present invention as a colorant. The dyes of the present invention provide orange to red dyeings having very good fastness properties on these materials, preferably fiber materials.

Advantageously, the as-synthesized solutions of the dyes of formula (1) according to the present invention can be used directly as a liquid preparation for dyeing, if appropriate after addition of a buffer substance and if appropriate after concentration or dilution.

Fiber materials and fibers herein are in particular textile fibers which can be present as woven fabrics, yarns or in the form of hanks or wound packages.

Examples of materials comprising carboxamide groups are synthetic and natural polyamides and polyurethanes, in particular in the form of fibers, for example wool and other animal hairs, silk, leather, nylon-6,6, nylon-6, nylon-11 and nylon-4.

Materials comprising hydroxyl groups are those of natural or synthetic origin, for example cellulose fiber materials or their regenerated products and polyvinyl alcohols. Cellulose fiber materials are preferably cotton, but also other vegetable fibers, such as linen, hemp, jute and ramie fibers. Regenerated cellulose fibers are for example staple viscose and filament viscose.

The dyes of formula (1) according to the present invention can be applied to and fixed on the materials mentioned, in particular on the fiber materials mentioned, by following the application techniques known for water-soluble and particularly for fiber-reactive dyes.

On cellulose fibers, dyeings having very good color yields are obtained by exhaust methods from a short liquor as well as from a long liquor, by using various acid-binding agents and if appropriate neutral salts, such as sodium chloride or sodium sulfate. The liquor ratio can be selected within a wide range and is for example between 3:1 and 100:1, preferably between 5:1 and 30:1. Dyeing is preferably done in an aqueous bath at temperatures between 40 and 105°C, if appropriate at a temperature of up to 130°C under superatmospheric pressure, and if appropriate in the presence of customary dyeing auxiliaries. To improve the wetfastnesses of the dyed material, it is possible to remove unfixed dye in an aftertreatment. This aftertreatment is carried out in particular at a pH between 8 and 9 and at temperatures between 75 and 80°C.

One possible procedure is to introduce the material into the warm bath and to gradually heat the bath to the desired temperature and complete the dyeing operation. The neutral salts which speed the exhaustion of the dyes can also if desired only be added to the bath after the actual dyeing temperature has been reached.

Padding processes likewise provide excellent color yields and a very good color buildup on cellulose fibers, the dyes being fixable in a conventional manner by batching at room temperature or elevated temperature, for example at up to about 60°C, by steaming or by means of dry heat.

Similarly, the customary printing processes for cellulose fibers, which can be carried out in one step, for example by printing with a print paste comprising sodium bicarbonate or some other acid-binding agent, and by subsequent steaming at 100 to 103°C, or in two steps, for example by printing with a neutral or weakly acidic print paste and then fixing either passing the printed materials through a hot electrolyte-containing alkaline bath, or by overpadding with an alkaline electrolyte-containing padding liquor and subsequent batching or steaming or dry heat treatment of the alkali-overpadded material, produce strong color prints with well-defined contours and a clear white ground. The outcome of the prints is affected little, if at all, by variations in the fixing conditions.

When fixing by means of dry heat by following the customary thermofix processes, hot air at 120 to 200°C is used. In addition to the customary steam at 101 to 103°C, it is also possible to use superheated steam and high-pressure steam at temperatures of up to 160°C.

The acid-binding agents which effect the fixation of the dyes on the cellulose fibers are for example water-soluble basic salts of alkali metals and likewise alkaline earth metals of inorganic or organic acids or compounds which liberate alkali in the heat. Particularly suitable are the alkali metal hydroxides and alkali metal salts of weak to medium inorganic or organic acids, the preferred alkali metal compounds being the sodium and potassium compounds. Such acid-binding agents are for example sodium hydroxide, potassium hydroxide, sodium carbonate, sodium bicarbonate, potassium carbonate, sodium formate, sodium dihydrophosphate, disodium hydrophosphate, sodium trichloroacetate, waterglass or trisodium phosphate.

The dyes of formula (1) according to the present invention are notable for outstanding color strength and a steep course of the buildup curve on cellulose fiber materials when applied in the familiar dyeing and printing processes.

The dyeings and prints obtainable with the dyes of formula (1) according to the present invention on cellulose fiber materials further have good lightfastness and, in particular, good wetfastnesses, such as fastness to washing, milling, water, seawater, crossdyeing and acidic and alkaline perspiration, also good fastness to pleating, hotpressing and rubbing.

The dyeings and prints obtained following the customary aftertreatment of rinsing to remove unfixed dye portions further exhibit excellent wetfastnesses, in particular since unfixed dye portions are easily washed off because of their good solubility in cold water.

Furthermore, the dyes of formula (1) according to the present invention can also be used for the fiber-reactive dyeing of wool. Moreover, wool which has been given a nonfelting or low-felting finish (cf. for example H. Rath, Lehrbuch der Textilchemie, Springer-Verlag, 3rd edition (1972), pages 295-299, especially finished by the Hercosett process (page 298); J. Soc. Dyers and Colourists 1972, 93-99, and 1975, 33-44), can be dyed to very good fastness properties. The process of dyeing on wool is here carried out in a conventional manner from an acidic medium. For instance, acetic acid and/or ammonium sulfate or acetic acid and ammonium acetate or sodium acetate can be added to the dyebath to obtain the desired pH. To obtain a dyeing of acceptable levelness, it is advisable to add a customary leveling agent, for example a leveling agent based on a reaction product of cyanuric chloride with three times the molar amount of an aminobenzenesulfonic acid and/or of an amino-naphthalenesulfonic acid or on the basis of a reaction product of for example stearylamine with ethylene oxide. For instance, the dye according to the invention is preferably subjected to the exhaust process initially from an acidic dyebath having a pH of about 3.5 to 5.5 under pH control and the pH is then, toward the end of the dyeing time, shifted into the neutral and optionally weakly alkaline range up to a pH of 8.5 to bring about, especially for very deep dyeings, the full reactive bond between the dyes according to the invention and the fiber. At the same time, the dye portion not reactively bound is removed.

The procedure described herein also applies to the production of dyeings on fiber materials composed of other natural polyamides or of synthetic polyamides and polyurethanes. These materials can be dyed using the customary dyeing and printing processes described in the literature and known to one skilled in the art (see for example H.-K. Rouette, Handbuch der Textilveredlung, Deutscher Fachverlag GmbH, Frankfurt/Main). In general, the material to be dyed is introduced into the bath at a temperature of about 40°C, agitated therein for some time, the dyebath is then adjusted to the desired weakly acidic, preferably weakly acetic acid, pH and the actual dyeing is carried out at a temperature between 60 and 98°C. However, the dyeings can also be carried out at the boil or in sealed dyeing apparatus at temperatures of up to 106°C. Since the water solubility of the dyes according to the invention is very good, they can also be used with advantage in customary continuous dyeing processes. The color strength of the dyes according to the invention is very high.

The present invention also provides inks for digital textile printing by the ink jet process, comprising one or more dyes of formula (1) according to the present invention.

The inks of the present invention contain dye of formula (1) according to the present invention in amounts of for example 0.1 % to 50% by weight, preferably in amounts of 1 % to 30% by weight and more preferably in amounts of 1 % to 15% by weight, based on the total weight of the ink. It will be appreciated that the inks can also contain mixtures of the dyes of the present invention and other dyes used in textile printing. For the inks to be used in the continuous flow process, a conductivity of 0.5 to 25 mS/m can be set by adding an electrolyte. Useful electrolytes include for example lithium nitrate and potassium nitrate.

The inks of the present invention can contain organic solvents in a total amount of 1 - 50% and preferably 5-30% by weight.

Suitable organic solvents are for example alcohols, for example methanol, ethanol, 1-propanol, isopropanol, 1-butanol, tert-butanol, pentyl alcohol, polyhydric alcohols for example: 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, hexanediol, D,L-1,2-hexanediol, 1,6-hexanediol, 1,2,6-hexanetriol, 1,2-octanediol, polyalkylene glycols, for example: polyethylene glycol, polypropylene glycol, alkylene glycols having 2 to 8 alkylene groups, for example monoethylene glycol, diethylene glycol, triethylene glycol, tetraethylene glycol, thioglycol, thiodiglycol, butyltriglycol, hexylene glycol, propylene glycol, dipropylene glycol, tripropylene glycol, low alkyl ethers of polyhydric alcohols, for example: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether, tripropylene glycol isopropyl ether, polyalkylene glycol ethers, such as for example: polyethylene glycol monomethyl ether, polypropylene glycol glycerol ether, polyethylene glycol tridecyl ether, polyethylene glycol nonylphenyl ether, amines, such as, for example: methylamine, ethylamine, triethylamine, diethylamine, dimethylamine, trimethylamine, dibutylamine, diethanolamine, triethanolamine, N-formylethanolamine, ethylenediamine, urea derivatives, such as for example: urea, thiourea, N-methylurea, N,N'-epsilon-dimethylurea, ethyleneurea, 1,1,3,3-tetramethylurea, N-acetylethanolamine, amides, such as for example: dimethylformamide, dimethylacetamide, acetamide, ketones or keto alcohols, such as for example: acetone, diacetone alcohol, cyclic ethers, such as for example; tetrahydrofuran, trimethylolethane, trimethylolpropane, 2-butoxyethanol, benzyl alcohol, 2-butoxyethanol, gamma butyrolactone, epsilon-caprolactam, further sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyn-olidone, 1-(3-hydroxypropyl)-2-pyrrolidone, 1,3-dimethyl-2-imidazolidinone, 1,3-dimethyl-2-imidazolinone, 1,3-bismethoxymethylimidazolidine, 2-(2-methoxyethoxy)ethanol, 2-(2-ethoxyethoxy)ethanol, 2-(2-butoxyethoxy)ethanol, 2-(2-propoxyethoxy)ethanol, pyridine, piperidine, butyrolactone, trimethylpropane, 1,2-dimethoxypropane, dioxane, ethyl acetate, ethylenediaminetetraacetate, ethyl pentyl ether, 1,2-dimethoxypropane and trimethylpropane.

The inks of the present invention may further contain customary additives, for example viscosity moderators to set viscosities in the range from 1.5 to 40.0 mPas in a temperature range from 20 to 50°C. Preferred inks have a viscosity of 1.5 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane, nonionic cellulose ethers.

As further additives the inks of the invention may include surface-active substances to set surface tensions of 20 to 65 mN/m, which are adapted if necessary as a function of the process used (thermal or piezotechnology).

Useful surface-active substances include for example: all surfactants, preferably nonionic surfactants, butyldiglycol and 1,2-hexanediol.

The inks may further include customary additives, for example substances to inhibit fungal and bacterial growth in amounts from 0.01 to 1% by weight based on the total weight of the ink.

The inks of the invention may be prepared in a conventional manner by mixing the components in water.

The inks of the invention are useful in inkjet printing processes for printing a wide variety of pretreated materials, such as silk, leather, wool, cellulosic fiber materials of any kind and polyurethanes, and especially polyamide fibers. The printing inks of the invention are also useful for printing pretreated hydroxyl- or amino-containing fibers present in blend fabrics, for example blends of cotton, silk, wool with polyester fibers or polyamide fibers.

In contrast to conventional textile printing, where the print paste already contains all the fixing chemicals and thickeners for a reactive dye, in inkjet printing the auxiliaries have to be applied to the textile substrate in a separate pretreatment step.

The pretreatment of the textile substrate, for example cellulose and regenerated cellulose fibers and also silk and wool, is effected with an aqueous alkaline liquor prior to printing. To fix reactive dyes there is a need for alkali, for example sodium carbonate, sodium bicarbonate, sodium acetate, trisodium phosphate, sodium silicate, sodium hydroxide, alkali donors such as, for example, sodium chloroacetate, sodium formate, hydrotropic substances such as, for example, urea, reduction inhibitors, for example sodium nitrobenzenesulfonates, and also thickeners to prevent flowing of the motives when the printing ink is applied, for example sodium alginates, modified polyacrylates or highly etherified galactomannans.

These pretreatment reagents are uniformly applied to the textile substrate in a defined amount using suitable applicators, for example using a 2- or 3-roll pad, contactless spraying technologies, by means of foam application or using appropriately adapted inkjet technologies, and subsequently dried.

After printing, the textile fiber material is dried at 120 to 150°C and subsequently fixed.

The fixing of the inkjet prints prepared with reactive dyes may be effected at room temperature or with saturated steam, with superheated steam, with hot air, with microwaves, with infrared radiation, with laser or electron beams or with other suitable energy transfer techniques.

A distinction is made between one- and two-phase fixing processes:

In one-phase fixing, the necessary fixing chemicals are already on the textile substrate.

In two-phase fixing, this pretreatment is unnecessary. Fixing only requires alkali, which, following inkjet printing, is applied prior to the fixing process, without intermediate drying. There is no need for further additives such as urea or thickener. Fixing is followed by the print aftertreatment, which is the prerequisite for good fastnesses, high brilliance and an impeccable white ground.

The prints produced using the inks of the present invention have a high color strength and a high fiber-dye bond stability not only in the acidic region but also in the alkali region, also good lightfastness and very good wetfastness properties, such as fastness to washing, water, seawater, crossdyeing and perspiration, and also good fastness to pleating, hotpressing and rubbing.

The examples hereinbelow serve to illustrate the invention. Parts and percentages are by weight, unless otherwise stated. Parts by weight relate to parts by volume as the kilogram relative to the liter. The compounds described in the examples in terms of a formula are indicated in the form of the sodium salts, since they are generally prepared and isolated in the form of their salts, preferably sodium or potassium salts, and used for dyeing in the form of their salts. The starting compounds described in the examples hereinbelow can be used in the synthesis in the form of the free acid or likewise in the form of their salts, preferably alkali metal salts, such as sodium or potassium salts.

### Example 1

a) 19 parts of cyanuric chloride are suspended in 200 parts of water and 100 parts of ice in the presence of a wetting agent. 32 parts of 2-amino-5-hydroxynaphthalene-1,7-disulfonic acid are added followed by stirring at 5-10°C for about 3-4 hours till the reaction is complete. During the reaction, the pH is maintained at pH 1.5 with 20% sodium hydroxide solution.
b) 35 parts of 4-aminoazobenzene-3,4'-disulfonic acid are initially charged in 300 parts of water at 15°C. After addition of 23 parts by volume of 31 % hydrochloric acid, 20.5 parts by volume of 5 N sodium nitrite solution are used to carry out an expeditious diazotization. After the reaction has ended, excess nitrite is removed.
c) The diazo compound prepared as per b) is added to the reaction mixture obtained as per a), while maintaining a pH of between 4.5 and 5 with 15% sodium carbonate solution.
d) The reaction mixture obtained under c) has added to it, in portions, 31 parts of a compound of formula (4a) 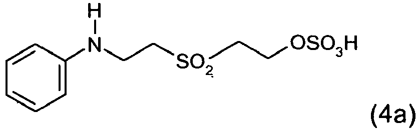 while the pH is maintained at 5 - 5.5 with 15% sodium carbonate solution.

The mixture is stirred at room temperature and pH 5 - 5.5 until the reaction has ended. The dye (λₘₐₓ = 510 nm) of formula (1a) according to the present invention (in the form of the free acid) 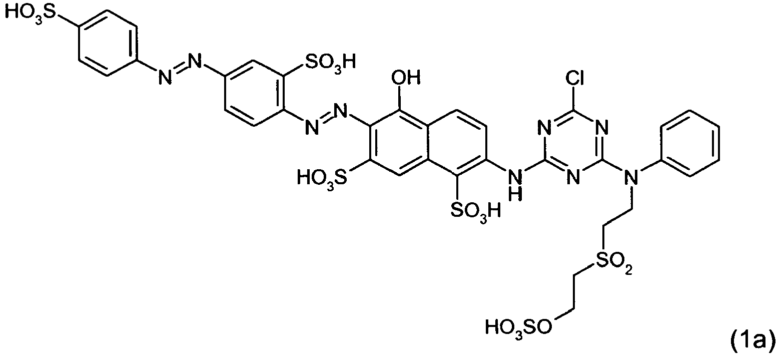 is isolated by salting out with sodium chloride

### Example 2

a) The reaction mixture obtained similarly to example 1 a) has added to it, in portions, 28 parts of the compound of formula (4a) while the pH is maintained at 4 to 4.5 with 15 % sodium carbonate solution. The temperature is raised to 30°C. The mixture is stirred until the reaction has ended.
b) The diazo compound prepared according to example 1 b) is added to the compound obtained according to a)
while a pH between 4.5 and 5 is maintained with 15% sodium carbonate solution. After the coupling reaction has ended, the pH is raised to 5.5.

The dye of formula (Ia) according to the present invention is isolated by salting out with sodium chloride.

### Example 3

### a) 34.4 parts of the compound of formula (8a) (in the form of the free acid)

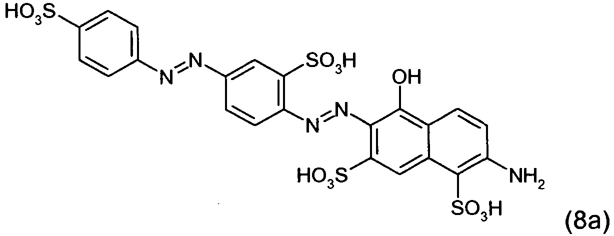

are initially charged in 400 parts of water at a pH of 2.8 to 3.2. Then, a suspension, adjusted to pH 4 - 4.5, of 43 parts of a compound of formula (9a) (written in the form of the free acid and known from EP 568876) 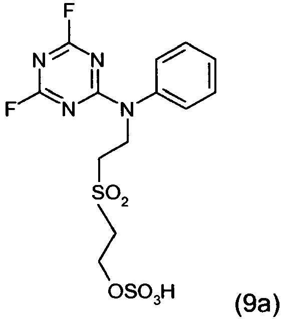 in 400 parts of water is added thereto in portions. During the reaction, the pH is adjusted to 2.8 to 3.2 and maintained with 15% of the sodium carbonate solution. The temperature is raised to 30°C. The mixture is stirred until the reaction has ended.

The dye (λₘₐₓ = 510 nm) of formula (Ib) according to the present invention (in the form of the free acid) 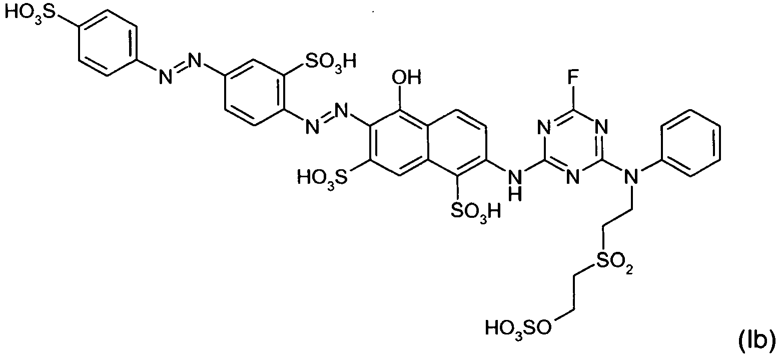 is isolated by salting out with sodium chloride.

### Example 4

2 parts of the dye obtained as per example 1 and 50 parts of sodium chloride are dissolved in 999 parts of water and 5 parts of sodium carbonate, 0.7 part of sodium hydroxide (in the form of a 32.5% aqueous solution) and, if appropriate, 1 part of a wetting agent are added. This dyebath is entered with 100 g of a woven cotton fabric. The temperature of the dyebath is initially maintained at 25°C for 10 minutes, then raised to the final temperature (40-80°C) over 30 minutes and maintained at the final temperature for a further 60-90 minutes. Thereafter, the dyed fabric is initially rinsed with tap water for 2 minutes and then with deionized water for 5 minutes. The dyed fabric is neutralized at 40°C in 1000 parts of an aqueous solution which contains 1 part of 50% acetic acid for 10 minutes. It is rinsed again with deionized water at 70°C and then soaped off at the boil with a laundry detergent for 15 minutes, rinsed once more and dried to provide a red dyeing having very good fastness properties. Similar results are obtained when the process described is repeated with the dyes obtained as per examples 2 and 3.

### Example 5

4 parts of the dye obtained as per example 1 and 50 parts of sodium chloride are dissolved in 998 parts of water and 5 parts of sodium carbonate, 2 parts of sodium hydroxide (in the form of a 32.5% aqueous solution) and if appropriate 1 part of wetting agent are added. This dyebath is entered with 100 g of a woven cotton fabric. The rest of the processing is carried out as reported in example 4 to provide a red dyeing of high color intensity and having very good fastness properties.

Similar results are obtained when the process described is repeated with the dyes obtained as per examples 2 and 3.

### Example 6

A textile fabric consisting of mercerized cotton is padded with a liquor containing 35 g/l of anhydrous sodium carbonate, 100 g/l of urea and 150 g/l of a low viscosity sodium alginate solution (6%) and then dried. The wet pickup is 70%.

The thus pretreated textile is printed with an aqueous ink containing
2% of the dye as per example 1
20% of sulfolane
0.01 % of Mergal K9N
77.99% of water
using a drop-on-demand (bubble jet) inkjet print head. The print is fully dried. It is fixed by means of saturated steam at 102°C for 8 minutes. The print is then rinsed warm, subjected to a fastness wash with hot water at 95°C, rinsed warm and then dried. The result is a red print having excellent service fastnesses.

### Example 7

A textile fabric consisting of mercerized cotton is padded with a liquor containing 35 g/l of anhydrous sodium carbonate, 50 g/l of urea and 150 g/l of a low viscosity sodium alginate solution (6%) and then dried. The wet pickup is 70%. The thus pretreated textile is printed with an aqueous ink containing
8% of the dye as per example 1
20% of 1,2-propanediol
0.01 % of Mergal K9N and
71.99% of water
using a drop-on-demand (bubble jet) inkjet print head. The print is fully dried. It is fixed by means of saturated steam at 102°C for 8 minutes.

The print is then rinsed warm, subjected to a fastness wash with hot water at 95°C, rinsed warm and then dried. The result is a red print having excellent service fastnesses.

### Example 8

A textile fabric consisting of mercerized cotton is padded with a liquor containing 35 g/l of anhydrous sodium carbonate, 100 g/l of urea and 150 g/l of a low viscosity sodium alginate solution (6%) and then dried. The wet pickup is 70%. The thus pretreated textile is printed with an aqueous ink containing
8% of the dye as per example 1
15% of N-methylpyrrolidone
0.01 % of Mergal K9N and
77.99% of water
using a drop-on-demand (bubble jet) inkjet print head. The print is fully dried. It is fixed by means of saturated steam at 102°C for 8 minutes. The print is then rinsed warm, subjected to a fastness wash with hot water at 95°C, rinsed warm and then dried. The result is a red print having excellent service fastnesses.

### Comparative example 1

The staining of adjacent fabric of cotton by dyeings on cotton tricot in standard depth of shade with the dye of formulae (1 a) and also with the dyes of formula (a), in the form of free acid, as per example 1 of W02007/006653 A2 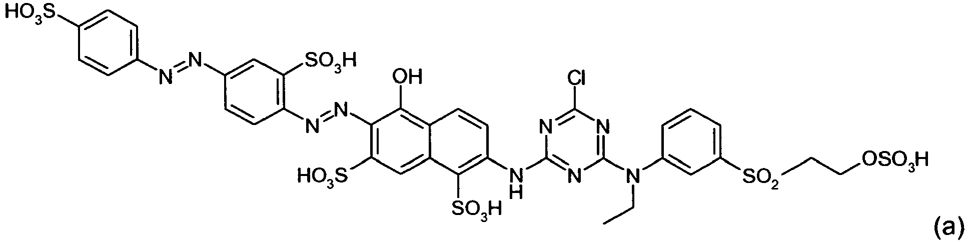 was determined under the conditions of
a) DIN EN ISO 105-E01 fastness to water: severe,
b) DIN EN ISO 105-E04 fastness to perspiration: alkaline, and
c) acetic acid storage test
d) E2 wash (95°C perborate) to DIN EN ISO105-C06-E2.

In this fastness test, the staining of adjacent cotton fabric is assessed. On the assessment scale used, 5 denotes no staining whatsoever and 1 denotes substantial staining. The following results were obtained:

| Dye | Fastness to water: severe | Fastness to perspiration: alkaline | Acetic acid storage test | E2 wash (95°C perborate) |
|---|---|---|---|---|
| (1a) | 4-5 | 4 | 4 | 3-4 |
| (a) | 4 | 3 | 3-4 | 2-3 |

## Claims

1. An azo dye of formula (1) 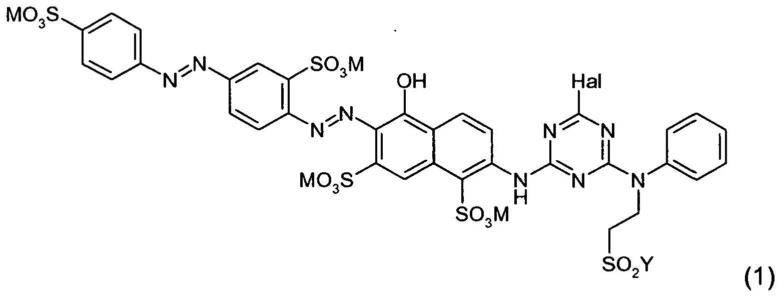 where
Y represents -CH=CH₂ or -CH₂CH₂Z, where Z is an alkali-detachable group;
M represents hydrogen, ammonium, an alkali metal or the equivalent of an alkaline earth metal;
and Hal is Cl or F.

2. The azo dye as claimed in claim 1 wherein Y represents -CH=CH₂, β-chlorethyl or β-sulfatoethyl.

3. The azo dye as claimed in claim 1 and/or 2 wherein M represents hydrogen, lithium or sodium.

4. The azo dye as claimed in claim 1 to 3 wherein Hal represents Cl.

5. The azo dye as claimed in claim 1 to 3, wherein Hal represents F.

6. A process for preparing an azo dye of formula (1) as claimed in one or more of claims 1 to 5, which comprises compounds of formulae (2), (3), (4) and (5) 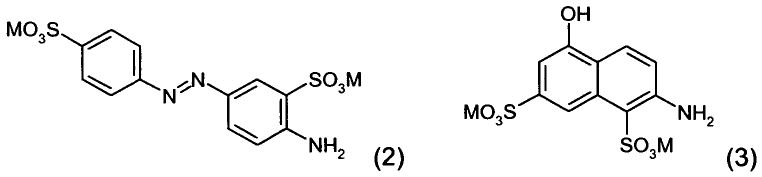 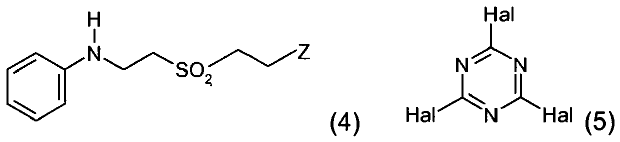 where Z and M each have the meanings given in claim 1, being prepared in a suitable sequence of diazotization, acylation and coupling reactions.

7. The process as claimed in claim 6 wherein
a) the compound of formula (2) is diazotized and coupled onto the compound of formula (3) to form the compound of formula (8) 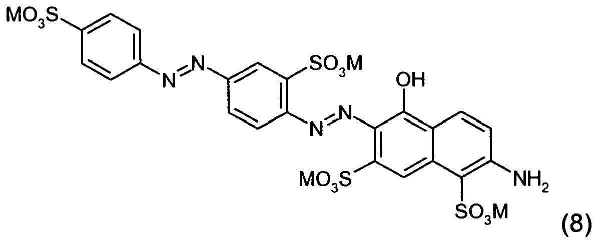
b) the compound of formula (8) is subsequently reacted with the compound of formula (5) to form the compound of formula (7) 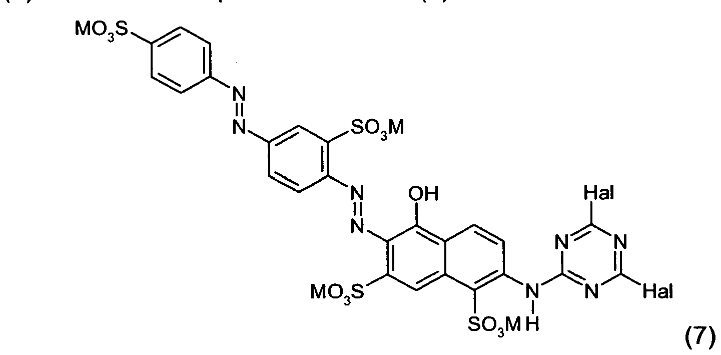 and
c) the compound of formula (7) is reacted with the compound of formula (4) to form the compound of formula (1).

8. The use of an azo dye as claimed in one or more of claims 1 to 5 for dyeing or printing material comprising hydroxyl and/or carboxamide groups.

9. A process for dyeing or printing material comprising hydroxyl and/or carboxamide groups, which comprises applying one or more dyes to the material in dissolved form and fixing the dye or dyes on the material by means of heat or with the aid of an alkaline agent or by means of both measures, which comprises utilizing an azo dye as claimed in one or more of claims 1 to 5.

10. An ink for digital textile printing by the ink jet process, comprising an azo dye as claimed in one or more of claims 1 to 5.

## Patentansprüche

1. Azofarbstoff der Formel (1) 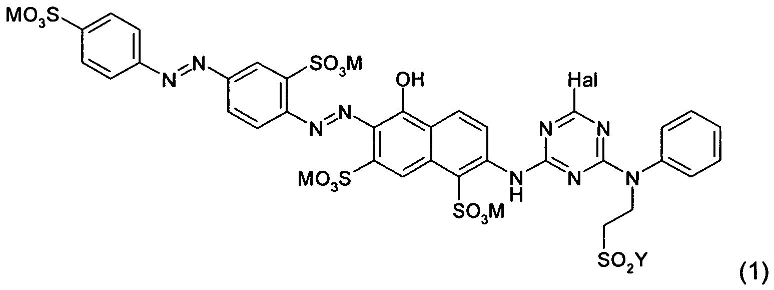 worin
Y für für -CH=CH₂ oder -CH₂CH₂Z steht, worin Z eine unter Alkaliwirkung abspaltbare Gruppe ist;
M für Wasserstoff, Ammonium, ein Alkalimetall oder das Äquivalent eines Erdalkalimetalls steht;
und Hal Cl oder F bedeutet

2. Azofarbstoff gemäß Anspruch 1, bei dem Y für -CH=CH₂, β-Chlorethyl oder β-Sulfatoethyl bedeutet.

3. Azofarbstoff gemäß Anspruch 1 und/oder 2, bei dem M für Wasserstoff, Lithium oder Natrium steht.

4. Azofarbstoff gemäß Anspruch 1 bis 3, bei dem Hal für Cl steht.

5. Azofarbstoff gemäß Anspruch 1 bis 3, bei dem Hal für F steht.

6. Verfahren zur Herstellung eines Azofarbstoffes der Formel (1) gemäß einem oder mehreren der Ansprüche 1 bis 5, bei dem Verbindungen der Formeln (2), (3), (4)
und (5) 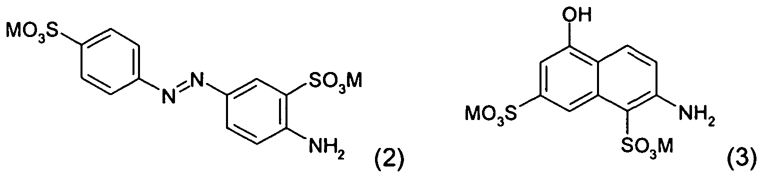 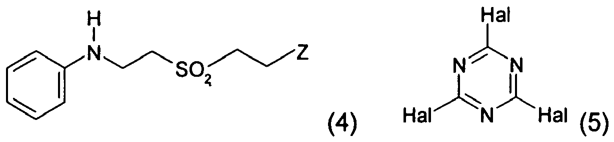 worin Z und M die in Anspruch 1 angegebenen Bedeutungen haben, in geeigneter Reihenfolge von Diazotierungs-, Acylierungs- und Kupplungsreaktionen hergestellt werden.

7. Verfahren gemäß Anspruch 6, bei dem
a) die Verbindung der Formel (2) diazotiert und auf die Verbindung der Formel (3) zur Verbindung der Formel (8) 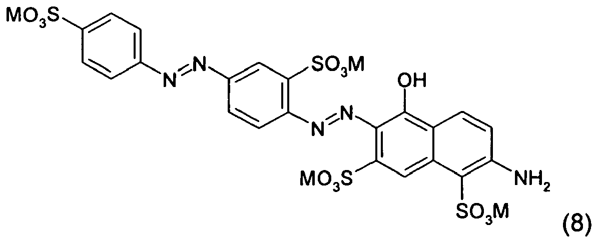 gekuppelt,
b) anschließend die Verbindung der Formel (8) mit der Verbindung der Formel (5) zur Verbindung der Formel (7) 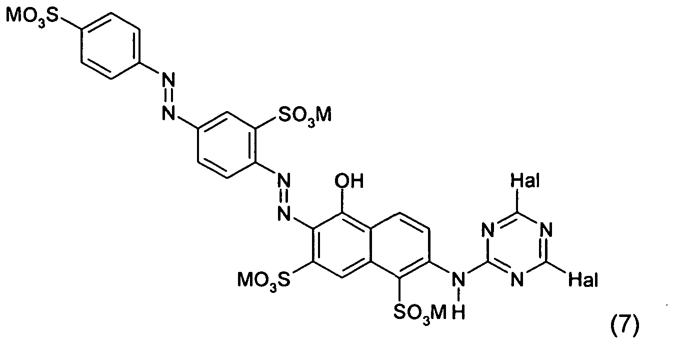 und
c) die Verbindung der Formel (7) mit der Verbindung der Formel (4) zur Verbindung der Formel (1) umgesetzt wird.

8. Verwendung eines Azofarbstoffes gemäß einem oder mehreren der Ansprüche 1 bis 5 zum Färben oder Bedrucken von hydroxy- und/oder carbonamidgruppenhaltigem Material.

9. Verfahren zum Färben oder Bedrucken von hydroxy- und/oder carbonamid-gruppenhaltigem Material, bei dem man einen oder mehrere Farbstoffe in gelöster Form auf das Material aufbringt und den oder die Farbstoffe auf dem Material mittels Wärme oder mit Hilfe eines alkalisch wirkenden Mittels oder mittels beider Maßnahmen fixiert, bei dem man einen Azofarbstoff gemäß einem oder mehreren der Ansprüche 1 bis 5 einsetzt.

10. Tinte für den digitalen Textildruck nach dem InkJet Verfahren, enthaltend einen Azofarbstoff gemäß einem oder mehreren der Ansprüche 1 bis 5.

## Revendications

1. Colorant azoïque de formule (1) 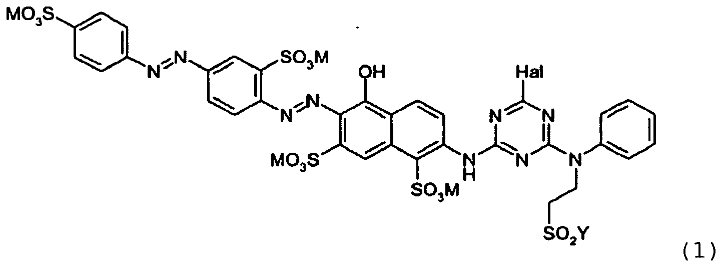 dans laquelle
Y représente -CH=CH₂ ou -CH₂CH₂Z, où Z est un groupe détachable par alcali ;
M représente hydrogène, ammonium, un métal alcalin ou l'équivalent d'un métal alcalino-terreux ;
et Hal est Cl ou F.

2. Colorant azoïque selon la revendication 1 dans lequel Y représente -CH=CH₂, β-chloroéthyle ou β-sulfatoéthyle.

3. Colorant azoïque selon la revendication 1 et/ou 2 dans lequel M représente hydrogène, lithium ou sodium.

4. Colorant azoïque selon la revendication 1 à 3 dans lequel Hal représente Cl.

5. Colorant azoïque selon la revendication 1 à 3, dans lequel Hal représente F.

6. Procédé pour préparer un colorant azoïque de formule (1) selon une ou plusieurs des revendications 1 à 5, qui comprend les composés des formules (2), (3), (4) et (5) 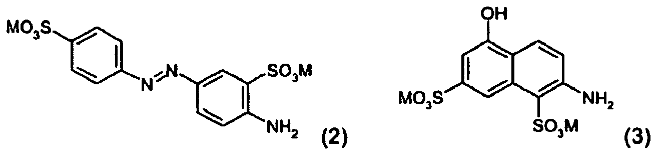 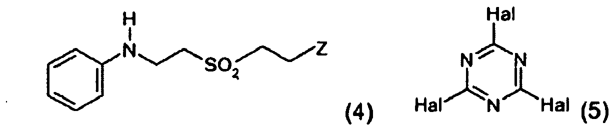 où Z et M ont chacun les définitions décrites dans la revendication 1, étant préparés dans une séquence adaptée de réactions de diazotation, d'acylation et de couplage.

7. Procédé selon la revendication 6 dans lequel
a) le composé de formule (2) est diazoté et couplé au composé de formule (3) pour former le composé de formule (8) 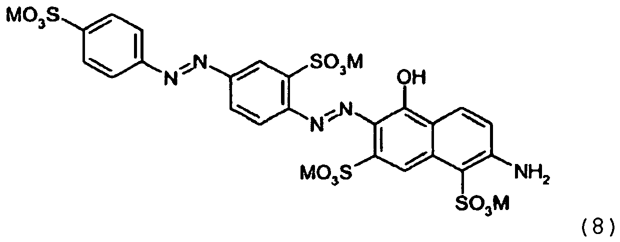
b) le composé de formule (8) réagit ensuite avec le composé de formule (5) pour former le composé de formule (7) 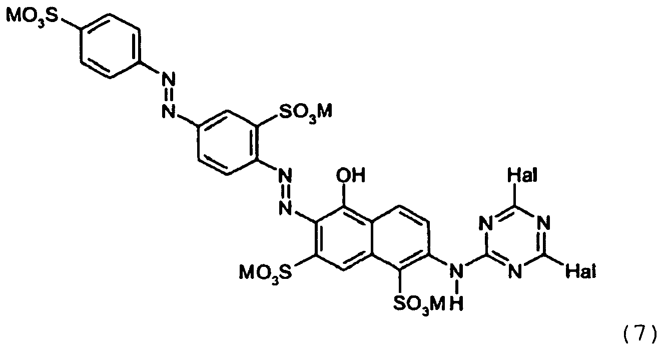 et
c) le composé de formule (7) réagit avec le composé de formule (4) pour former le composé de formule (1).

8. Utilisation d'un colorant azoïque dans une ou plusieurs des revendications 1 à 5 pour colorer un matériau d'impression comprenant des groupes hydroxyle et/ou carboxamide.

9. Procédé pour colorer ou imprimer un matériau comprenant des groupes hydroxyle et/ou carboxamide, qui comprend l'application d'un ou plusieurs colorants sur le matériau sous forme dissoute et la fixation du colorant ou des colorants sur le matériau au moyen de la chaleur ou à l'aide d'un agent alcalin ou au moyen des deux mesures, qui comprend l'utilisation d'un colorant azoïque selon une ou plusieurs des revendications 1 à 5.

10. Encre pour impression de textile numérique par le procédé à jet d'encre, comprenant un colorant azoïque selon une ou plusieurs des revendications 1 à 5.
